# EUROPEAN PATENT APPLICATION

(11) **EP 0 956 915 A2**
(43) Date of publication of application: **17.11.1999**
(21) Application number: 99303511.2
(22) Date of filing: 05.05.1999
(51) Int. Cl.: B21J 15/10, B21J 15/28

(54) **Process and installation for the construction of wings or stabilisers for aeroplanes**

(30) Priority: 05.05.1998 ES 9800941
(71) Applicant: Torres Martinez, Manuel, E-31007 Pamplona (ES)
(72) Inventor: Torres Martinez, Manuel, E-31007 Pamplona (ES)
(74) Representative: Evens, Paul Jonathan

(57) **Abstract**

Riveting process and installation for the construction of aerofoils (e.g., wings and stabilisers for aeroplanes), the installation comprising a riveting head (1), which is attached in a positionable manner on a carrying bridge (2); an anvil (3) which is in a position of relative opposition to the aforementioned head; and a series of transverse carriages (6) being mounted for longitudinal displacement, with passage under the bridge (2), with the carriages including positionable elements (7) intended to support the components of the aerofoil to be riveted. The entire functional assembly is related to a computer control, for the development of a process of automatic riveting.

## Description

The present invention relates to a method and apparatus for fabricating aerofoils, particularly wings or stabilisers for aeroplanes.

The construction of the wings and stabilisers of aeroplanes is brought about through the positioning of two covering sheets, one for the upper surface and one for the lower surface, which are fabricated into the desired shape (e.g., of an aerofoil) through the incorporation of longitudinal profiles called "stringers", while the union between both covering sheets is established by means of structural elements, called "ribs", which are arranged transversely between the aforementioned covering sheets.

The fixing of the "stringers" and of the "ribs" with respect to the covering sheets, is normally achieved by riveting, which requires very sophisticated techniques, for the necessary operation and precision, currently using for this exceedingly complicated and costly installations, as a result of which the operational processes become even more complex.

In accordance with the present invention there is proposed a riveting process and apparatus (e.g., in the form of an installation), through which come about very advantageous characteristics for operational function for the aforementioned of the wings and stabilisers of the aeroplanes, or similar structures.

According to a first aspect of the present invention, there is provided apparatus for constructing an aerofoil, comprising: a riveting station comprising rivet means and a corresponding anvil, the rivet means being opposite the anvil with both being moveable in a first direction in the riveting station; and carriage means for supporting at least two aerofoil components selected from the group consisting of an aerofoil skin, a rib and a stringer, the carriage means comprising elements having heads for engaging at least one of the at least two supported aerofoil components and positioning it with respect to other of the at least two supported aerofoil components during subsequent riveting, the carriage means being moveable relative to the riveting station in a second direction.

The heads of the elements may be pre-selected according to the aerofoil component they are to engage, and this may depend upon which stage of construction the aerofoil has reached. For example, the heads of the elements may include suction cups for engaging the aerofoil skin during the early stages of aerofoil construction, after arrangement of the stringers.

The carriage means may be moveable in the second direction, or the riveting station may be moveable in the second direction, or both may be moveable in the second direction. The second direction may be non-parallel to the first direction and may be perpendicular to the first direction.

The apparatus may further comprise coupling means having an elongate body with suction means at either end, each for engaging an aerofoil skin, the coupling means in use being disposed between and engaging opposed aerofoil skins to resist separation.

In one embodiment, the installation comprises a riveting head arranged in a moveable manner on a displaceable bridge which is situated over an anvil, the anvil being moveable so that in use it is opposite the head in whatever position, and a series of transverse carriages movably mounted on longitudinal guide means passing beneath the bridge, the carriages including multiple positionable elements provided with jointed heads for the fixing of components to be riveted.

The positionable elements of the carriages allow the establishment of fixing units adaptable to whatever type of pieces, the heads of some of the said elements having a suitable shape for the fixing of the "stringers" and of the "ribs" of the units to be riveted, while other elements are provided with air valve type heads, suitable for the fixing of the covering sheets, some of which heads have moreover a projecting lug which allows the position of the fastened pieces to be fixed with accuracy.

According to a second aspect of the present invention, there is provided a process for constructing an aerofoil comprising: providing a riveting station comprising rivet means and a corresponding anvil with both being moveable in a first direction in the riveting station; providing carriage means for supporting at least two aerofoil components selected from the group consisting of an aerofoil skin, a rib and a stringer, the carriage means comprising elements having heads adapted to engage at least one of the aerofoil components; supporting two aerofoil components on the carriage means, with at least one engaged by the heads of the elements to achieve alignment with the other of the two supported aerofoil components; and riveting together the two supported aerofoil components as the carriage means moves relative to the riveting station in a second direction.

In an embodiment of the second aspect of the invention, the riveting process comprises a working sequence which includes the following operations:
- Positioning of the "stringers", in accordance with the corresponding positions, on the positionable elements of the carriages.
- Positioning of the corresponding covering sheet on the "stringers" and transfer of the assembly to the working area for the riveting between the sheet and the "stringers".
- In the same way the union between the other covering sheet and the corresponding "stringers" is achieved.
- Positioning of the "ribs", in accordance with the corresponding positions, over the positionable elements of the carriages.
- Incorporation of one of the covering sheets fitted with the respective "stringers", over the ribs, and transfer of the assembly to the working area for the unifying riveting between the sheet and the ribs.
- Overturning of the united assembly of the sheet and the "ribs", for the inverted positioning over the suitable positionable elements of the carriages.
- Incorporation of the other covering sheet with its "stringers" over this former overturned assembly, in order to drill in the riveting points between the sheet and the "ribs", countersinking the drill through the outer face of the sheet.
- Withdrawal of the sheet with the countersunk holes, for the incorporation in correspondence with the holes of the "ribs", with a floating nut type element; repositioning the sheet for the fixing of the same by means of threaded rivets or bolts.

There is obtained in this way a simple realisation process, through which the construction of the corresponding structures is able to be done with the precision and accuracy required in aeronautical construction, using methods which allow the riveting process to unfold with absolute effectiveness, without excessive complexities.

An embodiment of the invention will now be described by way of example with reference to the accompanying figures in which:

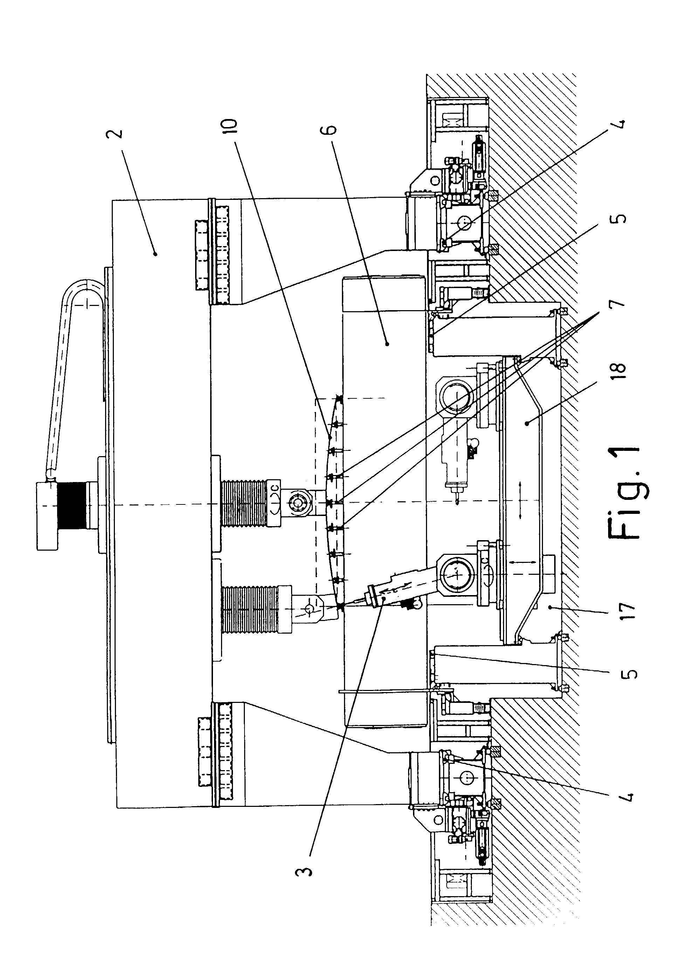

Figure 1 shows a front view of a riveting installation embodying the present invention;
Figure 2 is a perspective of the installation in the phase of positioning the "stringers" over the positionable elements of the carriages of the installation;
Figures 3, 4 and 5 show a perspective of the installation in successive positions of the phase of riveting the covering sheet over the "stringers";
Figures 6 and 7 show the sequence of the riveting of the covering sheet over the "stringers" in accordance with a view seen from the front;
Figure 8 is a perspective of the installation in the phase of positioning of the "ribs" over the carriages;
Figure 9 is a perspective of the installation in the phase of riveting of the covering sheet over the "ribs";
Figure 10 is a perspective of the installation in the phase of upturned position of the assembly of the covering sheet united with the ribs, for the incorporation of the respective covering sheet over the other side;
Figure 11 is a detail in front view which shows the provisional fixing between the two covering sheets of the structure;

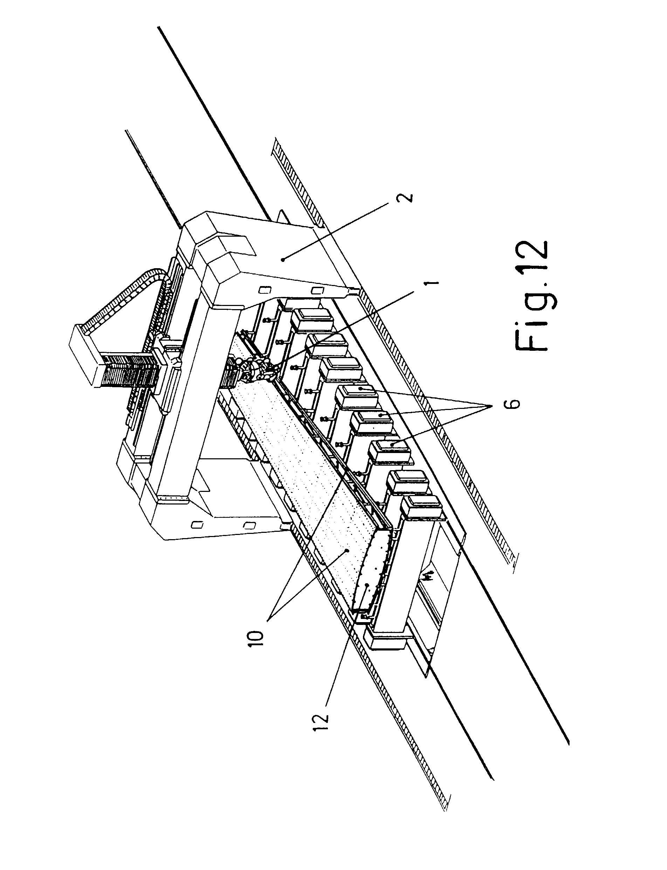

Figure 12 is a perspective of the installation in the phase of riveting of the second covering sheet of the structure under construction;
Figures 13, 14 and 15 show schematically the operating sequence of the riveting for the fixing of the second covering sheet over the structure under construction;
Figure 16 shows in perspective a riveting installation with transversely moveable loading platforms of the structure under construction and a longitudinally moveable carriage for additional operations over the structure.

The invention relates to a process and corresponding operational installation, for the construction riveting of structures such as those of the wings and stabilisers of aeroplanes.

The installation comprises a riveting head (1), which is incorporated in a moveable manner on a carrying bridge (2), there being positioned below an anvil (3) which may be aligned opposite the head (1) in whatever position.

The bridge (2) is incorporated in a moveable arrangement on longitudinal guides (4), parallel to which are included other guides (5), on which are incorporated an assembly of transverse carriages (6), which are able to be moved longitudinally with the possibility of passing under the bridge (2).

The said carriages (6) incorporate, mounted for positioning along the length of each one of them, a series of elements (7) able to be positioned in their turn in elevation, said elements (7) ending in respective heads (8) provided for the fixing of the pieces to be riveted, the said heads (8) having distinct shapes for the fixing of the different pieces to be fixed.

Particularly, some of the heads (8) of the elements (7) have a shape suitable for the fixing of the profiles (9) called "stringers" which are included as reinforcement for the covering plates (10) of the structures to be constructed, while other heads (8) are formed in the manner of a directable suction cup, which makes them suitable for the fixing of the appropriate sheets (10), and some of them incorporate a projecting lug (11) which permits the fixing of the position of the aforementioned sheets (10) by the riveter with precision.

The anvil (3) is incorporated in its mounting inside a trench (17), with the possibility of lowering in order to clear the passage of the carriages (6) above, being incorporated in a moveable manner on a corresponding support (18), in an arrangement of corresponding positioning aligned beneath the head (1) i.e., in registration in any position whatever.

For the working operation, the entire installation unit is designed to be controlled by means of computerised control, allowing a sequential executive realisation in an automatic manner by means of programming.

The process of construction of the structure of a wing or of a stabiliser of an aeroplane, in accordance with the intended aim, is achieved in the following manner:

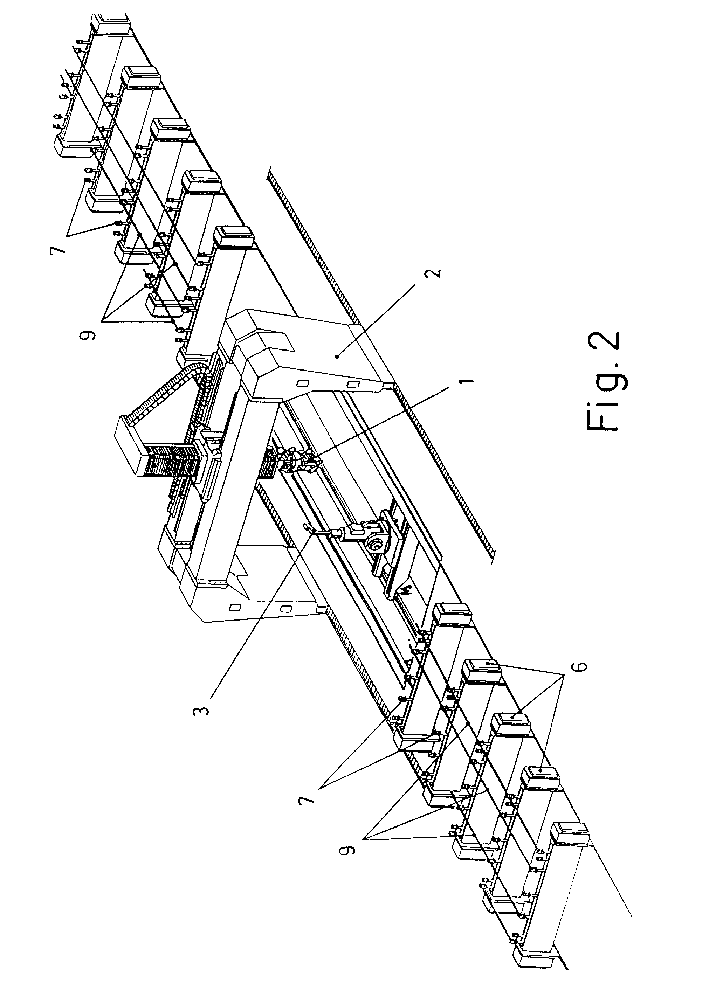

Over the positionable elements (7) provided with a head (8) of the appropriate shape, are arranged the "stringers" (9) which correspond, in accordance with the structure to be constructed, with the carriages (6) situated in the ends of the installation, as can be seen in figure 2.

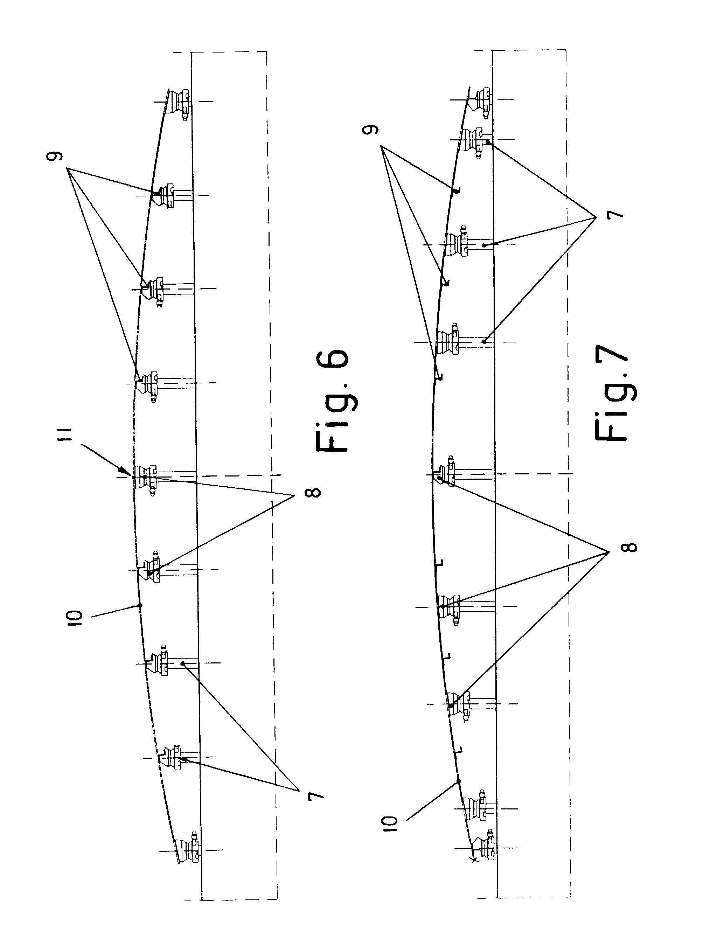

Once the "stringers" (9) are arranged in this way, the corresponding sheet (10) for which they are intended is incorporated above them, the said sheet (10) being fixed by means of elements (7) with a head (8) in the form of a suction cup, at the same time as the projecting lugs (11) of the heads (8) which have them, fitted in predetermined openings of the sheet, bringing about a totally precise positioning of it, as can be seen in figure 6.

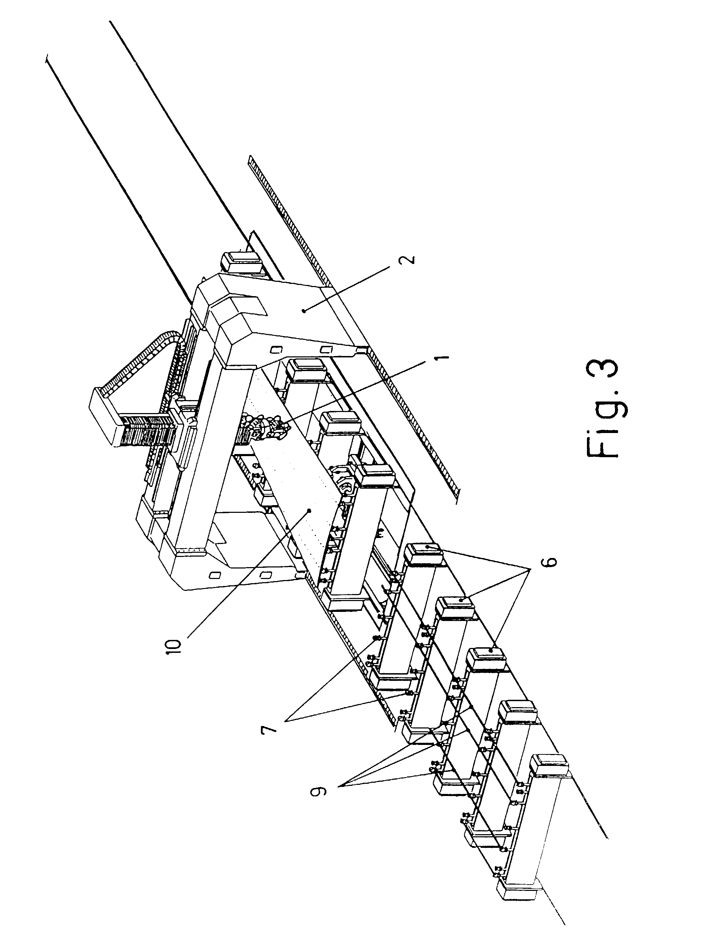

The unit thus prepared is transferred to the riveting work area, by means of the relative displacement of the corresponding carrying carriages (6) towards the riveting head (1), as can be seen in figure 3; the head (1) then being activated, which through automatic control based on the programming which has already been established, works in combination with the lower anvil (3), the riveting bringing about the attachment of the sheet (10) and the "stringers" (9) in the holes provided.

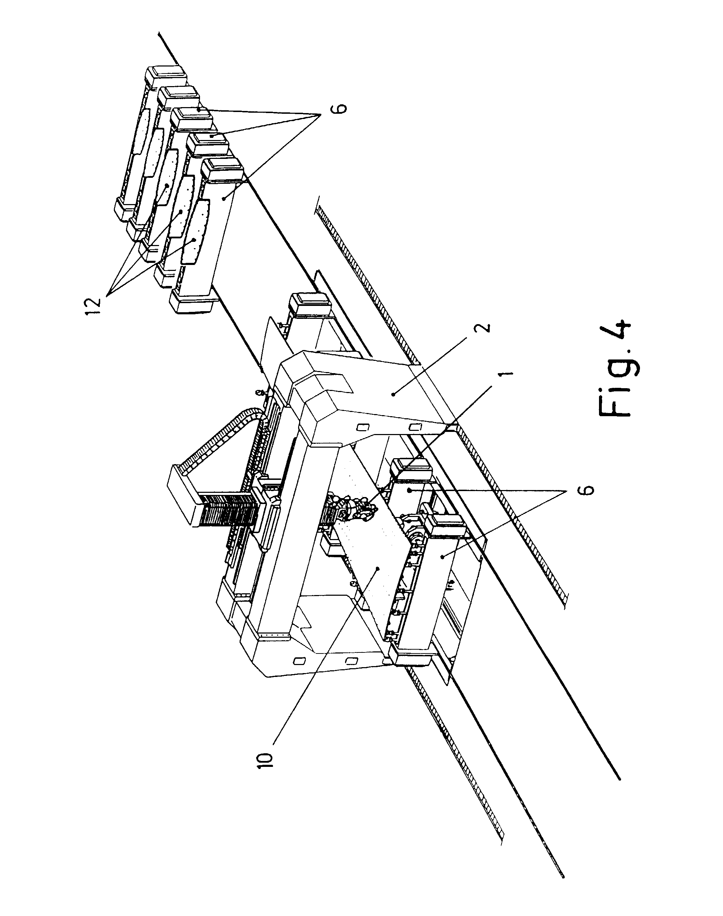

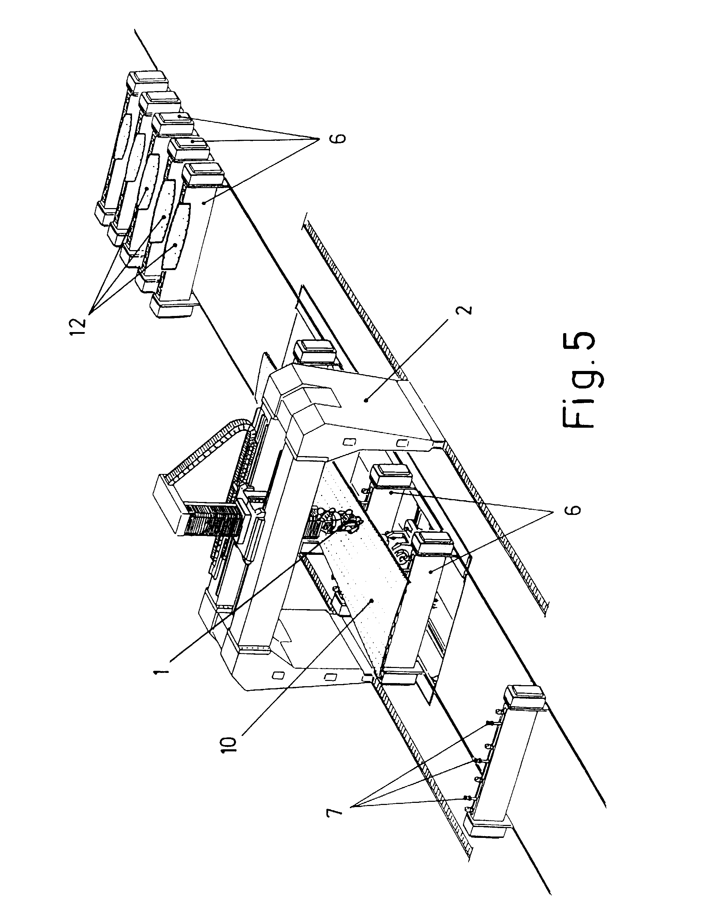

The positioning of the "stringers" (9) can be effected over two different groups of carriages (6) situated at opposite ends of the installation, so that the sheet (10) is placed over the "stringers" (9) situated over one of the groups of carriages (6), effecting the riveting of the respective sheet (10) of this group of "stringers" (9), in order to then repeat the operation, effecting the riveting of the sheet (10) over the other group of "stringers" (9), in accordance with the sequence shown in figures 3 - 4 and 6 - 7; with the final withdrawal from the carrying carriages (6) of the elements (7) which have a lug (11) in their head (8), for the riveting in the insertion holes of the aforementioned lugs (11), as can be seen in figure 5.

In the same way the other sheet (10) is prepared, incorporating over it the corresponding rigidifying stringers" (9), since the structure under construction must be made up by means of a face to face arrangement of both sheets (10) thus realised.

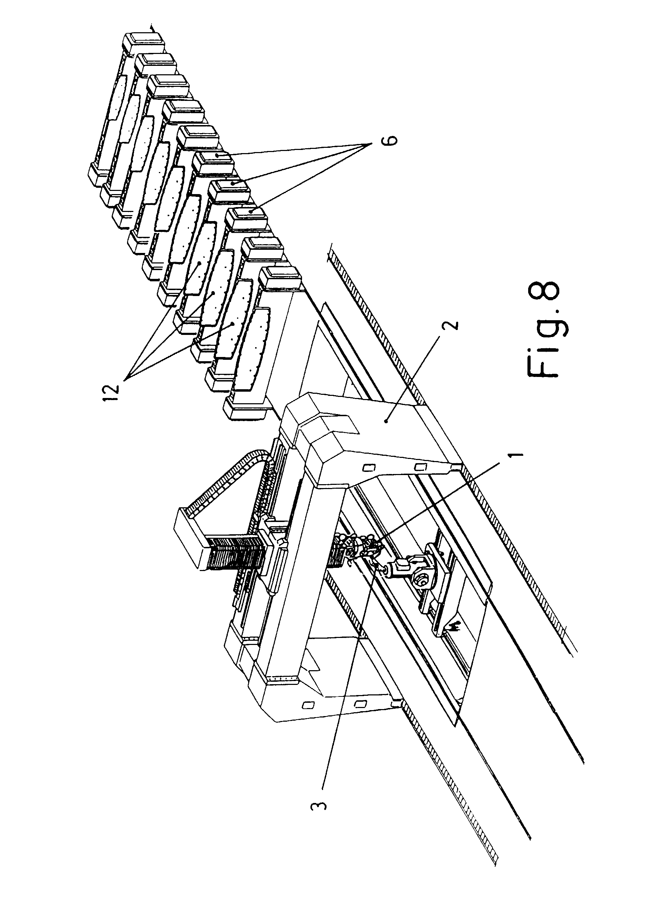

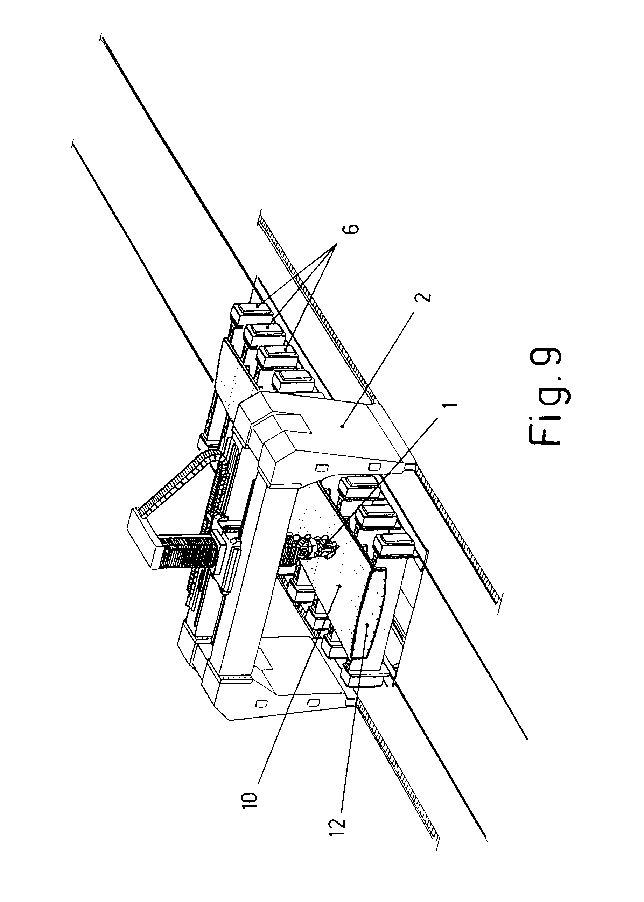

For this, as can be seen in figure 8, in the carriages (6) of the installation are arranged pieces (12), which are called "ribs", intended to provide a framework for the structure to be constructed; one of the previously prepared sheets (10) positioning itself over the assembly of the aforementioned "ribs" (12), in order thus to transfer the assembly to the riveting area, as can be seen in figure 9, where there is effected automatically, in accordance with the programming, the riveting of the sheet (10) over the "ribs" (12).

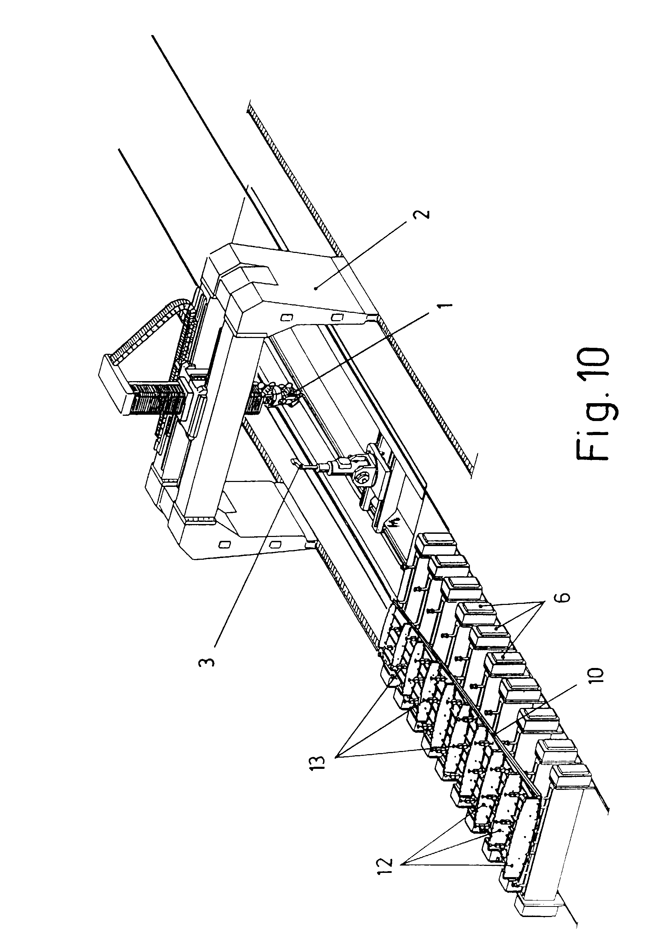

Then the united assembly of the sheet (10) and the "ribs" (12) is turned over, over the appropriate assembly of the carriages (6), as can be seen in figure 10, the fixing then being achieved by means of the elements (7) with suction cup heads (8), over the outer face of the sheet (10).

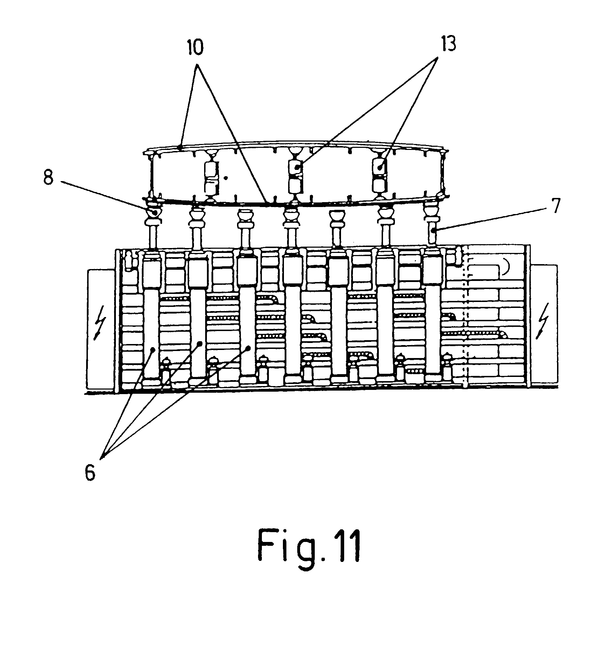

The other sheet (10) is then positioned above/supported over the "ribs" (9), this second sheet (10) being fixed in a provisional way by means of the inclusion of double suction cup implements (13) which are positioned between both sheets (10) of the assembly, as can be seen in figure 11.

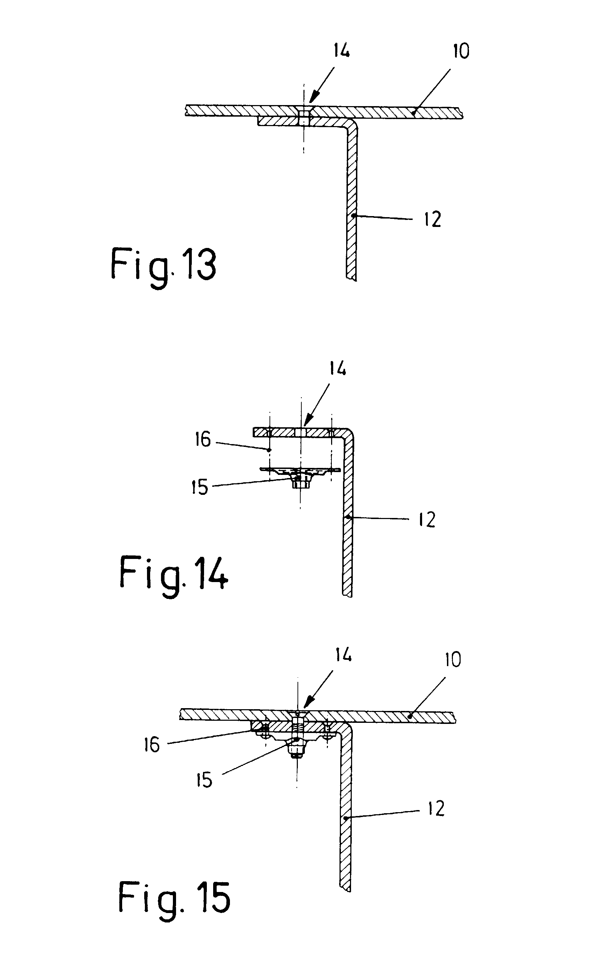

Drill holes (14) are subsequently effected by means of the head through the upper sheet (10) and the "ribs" (12) such holes being countersunk (14) through the outer part of the sheet (10), as can be seen in figure 13; after which the aforementioned upper sheet (10) is withdrawn, in order to position inside the "ribs" (12), corresponding with the holes (14) made in these, floating nut type elements (15), which are fixed by means of screwing or rivets (16), as seen in figure 14; being turned over again to position the drilled sheet (10), in order to effect the fixing of the same, through its holes (14), to the elements (15), by means of threaded rivets, as seen in figure 15.

When the corresponding wing or stabiliser are intended for a fuel tank, the elements (15) used will be of the fluidtight nut type, in order to avoid leaks through the fixings.

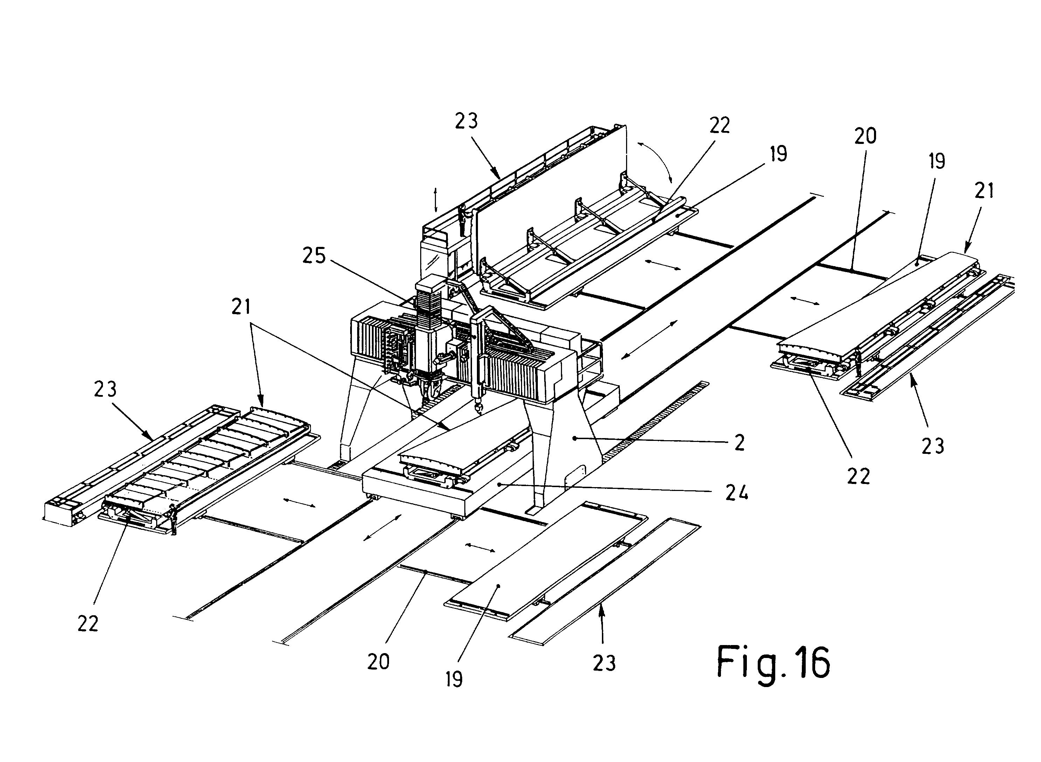

In the same rivet installation assembly may be incorporated platforms (19) moveable transversely over corresponding guides (20), as seen in figure 16; on such platforms (19) may be incorporated the structures under construction (21), by means of supports (22) capable of positioning the said structures (21) in a vertical position, in order to carry out on them any additional operation from work stations (23).

Over the actual longitudinal guides (5) it is possible to incorporate moreover a carriage (24), over which may be raised the structures (21), for the realisation of any complementary operation on these; there being available also on the bridge (2) additional heads (25), for any operation which it may be necessary to undertake.

## Claims

1. Riveting process and installation for the construction of wings or stabilisers for aeroplanes, characterised in that the installation comprises a riveting head (1), which is attached in a positionable manner on a carrying bridge (2), there being in a position of relative opposition to the aforementioned head a lower anvil (3), while a series of transverse carriages (6) is mounted for longitudinal displacement with passage under the bridge (2), in which carriages are incorporated positionable elements (7) each provided with a head (8) for the fixing of the pieces to be riveted; all these functional elements being in relation with a computer control able to develop an automatic process by means of programming.

2. Riveting process and installation for the construction of wings and stabilisers for aeroplanes according to claim 1, characterised in that the heads (8) of the elements (7) have shapes adapted for the fixing of the differing pieces of the constructions to be realised, some of the aforementioned heads (8) being provided with a projecting lug (11), to determine the exact positioning of the pieces to be fitted corresponding to predetermined holes in the same.

3. Riveting process and installation for the construction of wings and stabilisers for aeroplanes according to claim 1 or 2, characterised in that the anvil (3) is incorporated on a support (18) which is beneath the carriages (6) e.g., in a trench (17), being able to be lowered into concealment in order to leave free the displacement of the carriages (6) under the bridge (2).

4. Riveting process and installation for the construction of wings and stabilisers for aeroplanes according to any one of claims 1 to 3, characterised in that the riveting process includes the positioning of profiles or "stringers" (9) over the elements (7) of the carriages (6) and the incorporation of a sheet (10) above the assembly thus arranged, for the realisation of a unifying riveting of the aforementioned "stringers" (9) over the aforementioned sheet (10), comprising the structure to be constructed, by means of a face to face arrangement of two sheets (10) thus realised, with a union between the same by means of intermediate pieces (12), called "ribs", to which are fixed the aforementioned sheets (10) by means of corresponding rivets.

5. Riveting process and installation for the construction of wings and stabilisers for aeroplanes according to claim 4, characterised in that the "ribs" (12) are fixed over the elements (7) of the carriages (6), there being positioned above the first of the sheets (10) provided with its corresponding "stringers" (9), for the achievement of a unifying riveting of the aforementioned sheet (10) over the aforementioned "ribs" (12), the united assembly then being turned over, for inverted fixing over the appropriate elements (7) of the carriages (6), with the aim of positioning the second sheet (10) above for its unification to the assembly.

6. Riveting process and installation for the construction of wings and stabilisers for aeroplanes according to claim 5, characterised in that the second sheet (10) is fixed provisionally to the assembly under construction, by means of double suction cup implements (13) which are arranged between both sheets (10), drill holes (14) then being made passing through the upper sheet (10) and the "ribs" (12), with countersinking of the said drill holes (14) in the outer face of the sheet (10), after which the aforementioned upper sheet (10) is withdrawn for the incorporation of floating nut type elements (15), inside the "ribs" (12), corresponding to the respective openings of the drill holes (14), the upper sheet (10) then being returned to position for the fixing of the same by means of threaded rivets to the elements (15) incorporated over the "ribs" (12).

7. Riveting process and installation for the construction of wings and stabilisers for aeroplanes according to claim 6, characterised in that when the structure to be constructed is intended for a fuel tank, the elements (15) used for the fixing of the upper sheet (10) are fluidtight nuts.

8. Apparatus for constructing an aerofoil, comprising: a riveting station comprising rivet means and a corresponding anvil, the rivet means being opposite the anvil with both being moveable in a first direction in the riveting station; and carriage means for supporting at least two aerofoil components selected from the group consisting of an aerofoil skin, a rib and a stringer, the carriage means comprising elements having heads for engaging at least one of the at least two supported aerofoil components and positioning it with respect to another of the at least two supported aerofoil components during subsequent riveting, the carriage means being moveable relative to the riveting station in a second direction which is non parallel to the first direction.

9. A process for constructing an aerofoil comprising: providing a riveting station comprising rivet means and a corresponding anvil with both being moveable in a first direction in the riveting station; providing carriage means for supporting at least two aerofoil components selected from the group consisting of an aerofoil skin, a rib and a stringer, the carriage means comprising elements having heads adapted to engage at least one of the aerofoil components; supporting two aerofoil components on the carriage means, with at least one engaged by the heads of the elements to achieve alignment with the other of the two supported aerofoil components; and riveting together the two supported aerofoil components as the carriage means moves relative to the riveting station in a second direction.
